# EUROPEAN PATENT APPLICATION

(11) **EP 1 256 807 A1**
(43) Date of publication of application: **13.11.2002**
(21) Application number: 01904430.4
(22) Date of filing: 14.02.2001
(51) Int. Cl.: G01N 35/02, G01N 35/10, G01N 33/566, G01N 33/53, G01N 37/00

(54) **DETECTING SUBSTANCE ARRANGEMENT DEVICE, FILM FOR DETECTING SUBSTANCE ARRANGEMENT, AND METHOD OF MANUFACTURING DETECTING SUBSTANCE SUPPORT BODY**

(30) Priority: 15.02.2000 JP 2000037273
(71) Applicant: Unitec Co., Ltd., Matsudo-shi, Chiba 270-0025 (JP)
(72) Inventor: TAJIMA, Hideji, Inagi-shi, Tokyo 206-0812 (JP)
(74) Representative: Bohnenberger, Johannes, Dr.
(86) International application number: JP0101031
(87) International publication number: WO01061361

(57) **Abstract**

The invention relates to an apparatus for positioning substances for detection, a film for use in positioning substances for detection, and a manufacturing method for a carrier for substances for detection. An object is to provide an apparatus for positioning substances for detection, a film for use in positioning substances for detection, and a manufacturing method for a carrier for substances for detection which enable an automated, simple and low cost manufacture of large quantities of carriers for substances for detection.

The construction involves a dispenser having one or a plurality of conduits and a suction/discharge device for adjusting the pressure inside the conduits; a regeneration section for cleaning or replacing the conduits; a vessel having a plurality of liquid storage sections in which are contained suspensions incorporating each of the various substances for detection and into which the conduits are able to be inserted; a stage on which is mounted a film whereon dispensing of the liquids by the dispenser, or painting or imprinting is carried out; a displacement device which enables the movement of the conduits relative to the regeneration section, the vessel and the stage; and a control section for controlling the displacement device and the suction/discharge device, and the control section effects control to repeatedly carry out, suction, discharge and movement of the suspensions containing the substances for detection using the conduits, as well as the cleaning or replacement of the conduits, to thereby ensure that each of the suspensions will be positioned on the film mounted on the stage in narrow parallel lines and so as not to contact adjacent suspensions.

## Description

### BACKGROUND OF THE INVENTION

### Field of the Invention

The present invention relates to an apparatus for positioning substances for detection, a film for use in positioning substances for detection, and a manufacturing method for a carrier for substances for detection. The invention relates to all manner of fields which require the examination or analysis of biopolymers such as genes, immune systems, proteins and sugars; including the fields of engineering, agricultural science incorporating foodstuffs, agricultural production and fish processing, pharmaceuticals, the medical field incorporating hygiene, health, immunity, disease and heredity, and scientific fields such as chemistry and biology.

In particular, the present invention relates to an apparatus for positioning substances for detection, a film for use in positioning substances for detection, and a manufacturing method for a carrier for substances for detection, for manufacturing a carrier for substances for detection which is suitable for the analysis of genes, including mutational analysis, polymorphic analysis, mapping, base sequence analysis, and mechanism analysis.

### Description of the Related Art

Currently, determinations of gene base sequences use a DNA chip wherein an oligonucleotide with a predetermined base sequence is attached to a substrate at a predetermined location. This type of DNA chip is a flat sheet comprising a semiconductor film or a slide glass, on to which is spotted a minute quantity of suspensions of a plurality of different, known oligonucleotides, with the oligonucleotides fixed in an array pattern sequence.

Furthermore, another current method for manufacturing a biopolymer sequenced sheet comprises fixing a biopolymer to a rod shaped carrier such as a glass capillary tube, bundling a plurality of the glass capillary tubes together, and then slicing the bundle to generate a biopolymer sequenced sheet (Japanese Patent Laid-Open Publication No. Hei 11-108928).

### SUMMARY OF THE INVENTION

However in the manufacture of DNA chips, in order to form a plurality of oligonucleotides on the restricted surface of a DNA chip, it is necessary to use a pipette apparatus and then dispense spot by spot a minute quantity of each oligonucleotide suspension on to the surface leaving a predetermined separation between adjacent spots. Unfortunately this process suffers from requiring a labor intensive operation to ensure the prevention of mixing between the oligonucleotide suspensions.

Because the manufacture of each DNA chip takes considerable time and effort, the manufacture of large quantities of DNA chips requires an enormous expenditure of time and labor. Particularly in the determination of various base sequences, it is necessary to be able to supply DNA chips simply, at low cost, and in large quantities, but this is not possible with conventional manufacturing methods.

Furthermore in order to manufacture the aforementioned biopolymer sequenced sheet, first each biopolymer must be fixed to each rod shaped glass capillary tube carrier, but in those cases where there is a large number of such capillary tube carriers, insertion of each glass capillary tube into the container holding each suspension of one of the biopolymers and subsequent suction requires a great deal of time and is a significant burden on the operator. Moreover, it is also necessary to bundle a plurality of the rod shaped carriers of the fixed glass capillary tubes, and then line up the carriers, with the biopolymers and positions associated. The operation of taking a plurality of glass capillary tubes and then lining up the tubes in positions associated with the substances fixed to the tubes and with a predetermined separation between adjacent tubes (if no separation is left, then a sheet results and bundling becomes impossible) and then arranging as a rolled sheet requires a great deal of effort.

The present invention aims to resolve the problems outlined above, with a first object of providing an apparatus for positioning substances for detection, a film for use in positioning substances for detection, and a manufacturing method for a carrier for substances for detection which enable the simple and low cost manufacture of large quantities of carriers for substances for detection.

A second object of the present invention is to provide an apparatus for positioning substances for detection, a film for use in positioning substances for detection, and a manufacturing method for a carrier for substances for detection which enable efficient and rapid manufacture of carriers for substances for detection.

A third object of the present invention is to provide an apparatus for positioning substances for detection, a film for use in positioning substances for detection, and a manufacturing method for a carrier for substances for detection which enable the automated manufacture of large quantities of carriers for substances for detection by reducing as far as possible the dependency on the processing ability of human operators and moreover removing as far as possible all human processing.

A fourth object of the present invention is to provide an apparatus for positioning substances for detection, a film for use in positioning substances for detection, and a manufacturing method for a carrier for substances for detection which are suitable for handling biopolymers such as heredity matter such as DNA, immunity matter, proteins and sugars.

In order to resolve the above problems a first aspect of the invention is an apparatus for positioning substances for detection which comprises: a dispenser having one or a plurality of conduits and a suction/discharge device for adjusting the pressure inside the conduits; a regeneration section for cleaning or replacing the conduits; a vessel having a plurality of liquid storage sections in which are contained suspensions incorporating each of the various substances for detection and into which the conduits are able to be inserted; a stage on which is mounted a film whereon dispensing, painting or imprinting of the liquids by the dispenser is carried out; a displacement device which enables the movement of the conduits relative to the regeneration section, the vessel and the stage; and a control section for controlling the displacement device and the suction/discharge device, and the control section effects control to repeatedly carry out, suction, discharge and movement of the suspensions containing the substances for detection using the conduits, as well as the cleaning or replacement of the conduits, to thereby ensure that each of the suspensions will be positioned on the film mounted on the stage in narrow parallel lines and so as not to contact adjacent suspensions.

In the description below the term "plurality" refers to "two or more". The term "line contact" includes line intersections. A conduit is a pipe shaped member through which a liquid can flow or in which a liquid can be retained and includes both conduits which are detachable with respect to the main body and those which are not detachable. The term "line" will usually refer to a straight line, but curved lines are also possible. A substance for detection refers to a target substance for which a structure is to be determined, or a target substance which is to be detected so that various analyses can be conducted, and includes heredity matter such as DNA, RNA, and oligonucleotides, biopolymers such as proteins and sugars, microorganisms such as bacteria and viruses, and tissues such as cells.

A second aspect of the invention is an apparatus for positioning substances for detection which comprises: a printing device having one or a plurality of conduits, one or a plurality of storage sections which each contain a suspension incorporating one of the various substances for detection and which are communicated with the conduits, and a discharge device which adjusts the pressure inside the conduits and the storage sections and discharges the suspensions; a regeneration section for cleaning or replacing the conduits and the storage sections; a stage on which is mounted a film whereon printing is carried out by the printing device; a displacement device which enables the movement of the conduits relative to the regeneration section and the stage; and a control section for controlling the displacement device and the discharge device, and the control device effects control to repeatedly carry out the discharge and movement of the suspensions incorporating the substances for detection using the conduits, as well as the cleaning or replacement of the conduits and the storage sections, to thereby ensure that each of the suspensions will be positioned on the film mounted on the stage in narrow parallel lines and so as not to contact adjacent suspensions.

A third aspect of the invention is an apparatus for positioning substances for detection which comprises: one or a plurality of liquid retention tips made up of a slotted needle, a cylinder, a pen nib, or a linear imprint section; a regeneration section for cleaning or replacing the liquid retention tips; a vessel having a plurality of liquid storage sections in which are contained suspensions incorporating each of the various substances for detection and into which the liquid retention tips are able to be inserted; a stage on which is mounted a film whereon painting, writing or imprinting is carried out by the liquid retention tips; a displacement device which enables the movement of the liquid retention tips relative to the regeneration section, the vessel and the stage; and a control section for controlling the displacement device, and the control device effects control to repeatedly carry out retention and displacement of the suspensions incorporating the substances for detection using the liquid retention tips, as well as cleaning or replacement of the tips, to thereby ensure that each of the suspensions will be positioned on the film mounted on the stage in narrow parallel lines and so as not to contact adjacent suspensions.

In the above description, the term retention tip refers to a member like a pen nib for which both liquid retention, and output through either leakage or exudation are possible. With the third aspect of the invention it is also possible to replace the vessel with a storage section which is communicated with the liquid retention tip and which is able to supply the suspensions. In such a case the regeneration device cleans or replaces the entire liquid retention tip and storage section.

For the first, second and third aspects of the invention, in those cases where the conduits, the liquid retention tips, or the conduits and storage sections are not detachable from the main body, the regeneration section is a cleaning tank containing a cleaning liquid into which the conduits and liquid retention tips can be inserted, whereas in those cases where the conduits, the liquid retention tips, or the conduits and storage sections are detachable from the main body, the regeneration section is a detachment section where following removable of each of the detachable members, a new conduit, liquid retention tip, or conduit and storage section is installed.

Furthermore, it is preferable if the control section is controlled so that cleaning is carried out by passing the cleaning liquid repeatedly through the conduits and storage sections using the suction/discharge device, or by repeatedly moving the liquid retention tips inside the cleaning tank.

By using the first, second and third aspect of the invention it is possible to automatically and reliably position suspensions incorporating substances for detection, without cross contamination and without human intervention, to form a plurality of parallel lines. Furthermore, by controlling the pressure inside the conduits, as well as the horizontal and vertical displacement of the conduits or the liquid retention tips relative to the film, and altering the shape of the conduits or the liquid retention tips, a substance for detection line of appropriate width and concentration can be positioned with ease, meaning significant variation is possible.

In the case of the first and third aspect of the invention, cleaning or replacement is conducted solely with the conduits or the liquid retention tips, meaning processing is fairly simple. In contrast in the case of the second aspect of the invention, because the suspension is stored in the storage section, a vessel is not required to hold the suspension. In both the first aspect of the invention and the second aspect of the invention, the amount of liquid in the line, and the thickness of the line can be conveniently altered by adjusting the discharge strength.

A fourth aspect of the invention is an apparatus for positioning substances for detection of according to any one of the first through third aspects of the invention, wherein the control section, with the conduits or liquid retention tips in which a particular type of suspension has been drawn up, retained or stored, sequentially repeats control so that the suspension is dispensed, painted, imprinted, written or printed on the film in a line from a predetermined position, and then so that the conduits or liquid retention tips are replaced or cleaned by the regeneration section, for positions successively displaced a minute distance from the predetermined position until all the different types of suspension have been completed, to thereby ensure that each of the suspensions incorporating a substance for detection will be positioned on the film mounted on the stage in narrow parallel lines and so as not to contact adjacent suspensions.

With the fourth aspect of the invention, the respective suspensions are positioned on to the film in lines displaced a minute distance apart, while the conduits and liquid retention tips or the storage sections are either cleaned or replaced. Consequently, the suspensions can be reliably and simply positioned in parallel lines without any cross contamination.

A fifth aspect of the invention is an apparatus for positioning substances for detection according to any one of the first through fourth aspects of the invention, which further comprises an integration device which rolls the film on which the substances for detection have been positioned and fixed in a series of parallel lines by dispersion, painting, impression, writing or printing, in a direction at right angles to the lines or alternatively laminates the film, and a cutting device for thinly slicing the film either after integration or prior to integration.

The provision of a single cutting integration device which combines the two functions of integration and cutting is also possible.

With the fifth aspect of the invention, because both an integration device for either rolling or laminating the film on which is positioned and fixed the substances for detection without bending the lines, and a cutting device are also provided, cutting the integrated film enables the reliable and simple manufacture of a carrier for substances for detection in large volumes.

A sixth aspect of the invention is a film for use in positioning substances for detection, wherein with a film with suspensions incorporating substances for detection positioned or fixed on the surface in parallel lines at a predetermined spacing, for integration by either rolling up, or alternatively laminating the film to form a layered structure, a series of concave portions which are capable of holding the suspensions are formed in parallel lines on the surface of the film, and an adhesion portion which will bond the film surface is provided at portions of the film which come in contact upon integration.

In the above description, the term "concave portion" incorporates channels and various other shapes.

The film is used in the manufacture of carriers for substances for detection which are used in the analyses and examinations necessary for determining the chemical structure of biopolymers such as DNA.

Furthermore, a "carrier for substances for detection" comprises either one, or two or more long and slender base members, and a variety of substances for detection of predetermined structure which are lined up and fixed along the length of the base members, and the base members are rolled, laminated or aligned, while bringing side portions thereof into contact with each other, while maintaining a spacing or while sandwiching an auxiliary member, to achieve a layered integration, and the substances for detection are fixed and retained on the base member, and the fixed location of each substance for detection on the layered surface is associated with the chemical structure thereof. The base members are produced by cutting the film. The shape of the carriers for substances for detection can be a thin circular sheet or a thin square sheet for example.

Suitable materials for this type of film include organic materials such as resins such as polypropylene, polystyrene, polyethylene, nylon, and urethane, inorganic materials such as semiconductors, metals, metalloids, glass, glass fiber, and ceramics, as well as organic/inorganic mixed materials such as fine grains or ultra fine grains of a metal or a ceramic laid on the surface of a tape type or film type organic material. Furthermore, it is preferable to use processed materials which give superior fixation of biopolymers to the film surface such as polypropylene or nylon where the surface thereof has been coated with a latex coat, a foam resin, or microbeads.

With a carrier for substances for detection manufactured from a film according to the present invention, channels or apertures will exist between the integrated base members. The channels and apertures where the substances for detection are not fixed can be filled with an adhesive or a filler.

With the sixth and a twelfth aspects of the invention, concave portions which are capable of holding the suspensions are formed in lines across the surface, and moreover the sections outside of the concave portions or the underside are provided with adhesive portions for binding the film surface where it contacts the concave portions, and consequently, the suspension from adjacent lines will not contact across the spacing between the lines meaning a high density of suspensions can be positioned, and moreover by rolling, binding, and cutting the film, a carrier for substances for detection can be formed simply and reliably.

A seventh aspect of the invention is a film for use in positioning substances for detection according to the sixth aspect of the invention, wherein the adhesive portion is either an adhesive which is painted, or coated on the film surface, or is minute irregularities or cilia which are provided on the film surface and which have the property of attaching like surface pairs to each other.

In the above description the term "minute irregularities or cilia" refers to a surface such as a latex coat surface made of a polyester formed on a substrate made of polypropylene.

With the present invention, the carrier for substances for detection will be bound in such a way that expansion is either possible or impossible. The carrier for substances for detection can also be bound by storage inside a storage vessel of a predetermined size. By storage inside a storage vessel it is possible to produce the carrier for substances for detection in cartridge form.

With the seventh and twelfth aspects of the invention, the adhesive portion is either an adhesive which is painted, or coated on to the film surface, or alternatively is a region of minute irregularities or cilia which is provided on the film surface and which have the property of attaching like surface pairs to each other, and so consequently the film is of a simple structure, and can be bound simply and reliably to either enable expansion or prevent expansion.

An eighth aspect of the invention, is a film for use in positioning substances for detection according to either one of the sixth or the seventh aspects of the invention, wherein the film is provided with either a linear type, particulate type, or sheet type homoiothermic material which is used for heating or cooling. Examples of this type of homoiothermic material include a conductor with a predetermined resistance value which is connected to a power supply, a conductive film, or iron powder which generates heat from oxidation.

With the eighth and twelfth aspects of the invention, by providing the film with either a linear type, particulate type, or sheet type homoiothermic material which is used for heating or cooling, then the product generated by integrating the film, and the detection carriers formed by cutting the integrated product are of a simple structure, and can be heated or cooled very easily.

A ninth aspect of the invention is a film for use in positioning substances for detection according to any one of the sixth through eighth aspects of the invention, wherein all or a portion of the film is either formed of, or coated with, a fixation material which will react with, bond with, impregnate, or adhere to the positioned substance for detection to thereby fix the substance for detection in place.

Examples of this type of fixation material include materials which incorporate hydroxyl groups (-OH), amino groups (-NH₂), carboxyl groups (-COOH) or epoxy groups, or alternatively avidin or biotin which are coated or painted on to the surface in advance. In such cases the salt concentration can be adjusted. In so doing the biopolymer substances for detection can be fixed, or become more readily fixable.

With the ninth and twelfth aspects of the invention, the substance for detection can be reliably and easily fixed to the film.

A tenth aspect of the invention is a film for use in positioning substances for detection according to any one of the sixth through ninth aspects of the invention, wherein the film is provided with a line shaped mark for identifying a location on the film.

The mark utilizes substances such as luminous materials. With the tenth aspect of the invention, the base members of the carrier for substances for detection are provided with marks for identifying the chemical structure of the substance for detection as well as the location on the surface of the layer formation of the carrier for substances for detection. According to the invention, the fixed location of each substance for detection on the surface of the layer formation of the carrier for substances for detection, and the bonding location of the labeled target substance being examined can be determined easily.

When a spiral disk shaped carrier for substances for detection, which is manufactured by thinly slicing a roll of this type of film at right angles to the roll axis, is used in conducting an analysis of a target substance, then for example, a first mark nearest the center is set as a starting point, and for each spot on the spiral on which is positioned one of the substances for detection, a table is stored in a memory apparatus, which associates the angle from the center for each spot (fixed location) with the type of substance for detection and the chemical structure thereof. Furthermore, by positioning a plurality of marks at periodic intervals, the relationships with a plurality of fixed locations can be assigned simply and reliably.

With the tenth and twelfth aspects of the invention, because the fixed locations of substances for detection can be simply and reliably determined using the marks, examinations or investigative analyses which use a carrier for substances for detection with this type of marking can be conducted with certainty and a good degree of reliability.

An eleventh aspect of the invention is a material for substances for detection in which substances for detection of predetermined chemical structures are positioned on a film surface in parallel lines with a minute spacing therebetween, with the chemical structure of each substance for detection and the location thereof associated.

This type of film is for example rectangular in shape, and displays sufficient impregnation ability or sufficient adhesion to the suspensions that adjacent lines of the suspensions formed through dispensing, painting, writing, or printing do not come in contact, or alternatively is provided with structures which prevent adjacent lines from contact.

Examples of this type of structure include films in which the entire surface is provided with minute irregularities or cilia for bonding two surfaces of the film together. One end of the film may also be formed as an integrated part of a core. In such a case, the film on which is fixed the substances for detection is integrated by rolling about the core.

In the eleventh and a twelfth aspects of the invention, the substances for detection of predetermined chemical structure are positioned on the film surface in parallel lines which do not contact and which are separated by minute spacings, and the chemical structure of each of the substances for detection fixed on the film surface and the location of that substance for detection are associated. Consequently, by finely slicing the film, a plurality of uniform carriers for substances for detection can be produced easily, and in large numbers.

The twelfth aspect of the invention is a material for substances for detection according to the eleventh aspect of the invention, wherein the film is the film for use in positioning substances for detection according to any one of the sixth through tenth [aspects of the] invention.

A thirteenth aspect of the invention is a method for manufacturing a carrier for substances for detection, comprising a positioning step which uses an apparatus for positioning substances for detection according to any one of the first through fifth aspects of the invention, whereby suspensions which each incorporate one of a variety of substances for detection are positioned on to either one, or two or more films in a plurality of narrow, parallel lines which do not come in contact with one another, by dispensing, painting, imprinting, writing, or printing; an integration step wherein surfaces of the film on which is fixed each of the substances for detection are brought together in a direction at right angles to the lines, and then integration is carried out by either rolling or laminating the film in such a way that expansion is either possible or impossible, either with a spacing between the surfaces or with the surfaces sandwiching an auxiliary member; and a cutting step in which the film on which is fixed each of the substances for detection is thinly sliced to produce a plurality of carriers; and the fixed locations of each substance for detection on the layer formation surface, which is a cross section through the cut, and the chemical structure thereof are associated

A binding step for binding the film may also be provided, either following the integration step described above, or alternatively concurrently with the integration step. Furthermore, a fixation step for fixing the positioned substances for detection on to the film can also be included in the positioning step. Furthermore, the cutting step can be performed before the integration step, concurrently with the integration step, or after the integration step.

By carrying out the cutting concurrently with the integration step, the amount of time required for the cutting step can be saved, thereby shortening the manufacturing time and speeding up the processing.

A fourteenth aspect of the invention is a method for manufacturing a carrier for substances for detection according to the thirteenth aspect of the invention, wherein the positioning step sequentially repeats: a step in which each of the conduits or the liquid retention tips are moved to, and inserted into a vessel containing a suspension which incorporates a substance for detection of a predetermined type with the suspension then being drawn up and retained; a step in which each of the conduits or liquid retention tips dispenses, paints, imprints or writes the suspension in a line from a predetermined location on the film; and a regeneration step in which the conduits or liquid retention tips are cleaned or replaced, to thereby position the various suspensions which incorporate the substances for detection in parallel non-touching lines. The regeneration step comprises the repetition of a step in which the conduits or liquid retention tips are cleaned by being moved to, and then inserted into the cleaning tank, with the cleaning liquid then being passed through the conduits, or the conduits and storage sections, or in the case of the liquid retention tips, the tips being moved around inside the cleaning liquid.

A fifteenth aspect of the invention is a method for manufacturing a carrier for substances for detection according to the thirteenth aspect of the invention, wherein the positioning step sequentially repeats: a step in which a conduit communicated with a storage section containing a suspension which incorporates a substance for detection of a predetermined type prints the suspension in a line from a predetermined location on the film; and a regeneration step in which the conduit and storage section are cleaned or replaced, to thereby position the suspension which incorporates the substance for detection in parallel non-touching lines.

In those cases where the conduits, liquid retention tips, or the conduits and storage sections are able to be detached from the main body, the regeneration step comprises detachment and replacement with new conduits, liquid retention tips, or conduits and storage sections.

With the thirteenth, fourteenth and fifteenth aspects of the invention, the apparatus for positioning substances for detection is used for positioning each of the substances for detection, and moreover the surfaces of the film on which is fixed the substances for detection are then brought together without bending the lines, an integration carried out by either rolling or laminating the film, either with a spacing between the surfaces or with the surfaces sandwiching an auxiliary member, and then the film on which is fixed the substances for detection is then thinly sliced to produce a plurality of carriers.

Consequently, by using such an apparatus for positioning substances for detection, large quantities of reliable, uniform carrier for substances for detection can be manufactured automatically without any significant human workload.

A sixteenth aspect of the invention is method of identifying the location of a substance for detection wherein at the time of identifying the location of a substance for detection on a carrier for substances for detection which has; either one, or two or more long and slender base members, a variety of substances for detection of predetermined chemical structure which are lined up and fixed along the length of the base members, and a mark which is provided at either one, or two or more specified positions on the base members, and the base members are rolled while bringing side portions thereby into contact with each other, while maintaining a space or while sandwiching an auxiliary member to achieve a layered integration, and the substances for detection are fixed and retained on the base member, and the fixed location of each substance for detection on the disk shaped layered surface is associated with the chemical structure of that substance for detection, the mark is taken as a starting point, and then depending on the distance lengthwise along the base member and the central angle, the location of the substance for detection is identified based on a correspondence table which associates the fixed location of each substance for detection with the type of substance for detection and the chemical structure thereof.

With the sixteenth aspect of the invention, by taking the marks, which are relatively few in number in comparison with the number of fixed locations of the substances for detection, as starting points, and then associating the fixed location of the substances for detection for each mark, the reliability and certainty of the location detection of the carrier for substances for detection can be improved.

### BRIEF DESCRIPTION OF THE DRAWINGS

FIG. 1 is an apparatus for positioning substances for detection according to an embodiment of the present invention.
FIG. 2 is a plan view of a film according to an embodiment of the present invention.
FIG. 3 is a side view of a film according to an embodiment of the present invention.
FIG. 4 is a diagram showing the positioning of a suspension on to a film according to an embodiment of the present invention.
FIG. 5 is another diagram showing the positioning of a suspension on to a film according to an embodiment of the present invention.
FIG. 6 is yet another diagram showing the positioning of a suspension on to a film according to an embodiment of the present invention.
FIG. 7 is a diagram showing a carrier for substances for detection manufactured by a method according to an embodiment of the present invention.
FIG. 8 is a diagram showing a microplate which corresponds with the positioning of a suspension on to a film according to an embodiment of the present invention.
FIG. 9 is a diagram showing a carrier for substances for detection manufactured by a method according to an embodiment of the present invention.
FIG. 10 is a diagram showing a carrier for substances for detection of DNA according to an embodiment of the present invention.
FIG. 11 is a diagram showing a reagent tank and a roller tool according to an embodiment of the present invention.
FIG. 12 is a diagram showing a cutting and rolling apparatus according to an embodiment of the present invention.
FIG. 13 is a flow chart showing a manufacturing method for a carrier for substances for detection according to an embodiment of the present invention.

### DETAILED DESCRIPTION OF THE PREFERRED EMBODIMENTS

As follows is a description of embodiments of the present invention, with reference to the drawings. Note that the embodiments described here do not limit the invention in any way unless particularly specified.

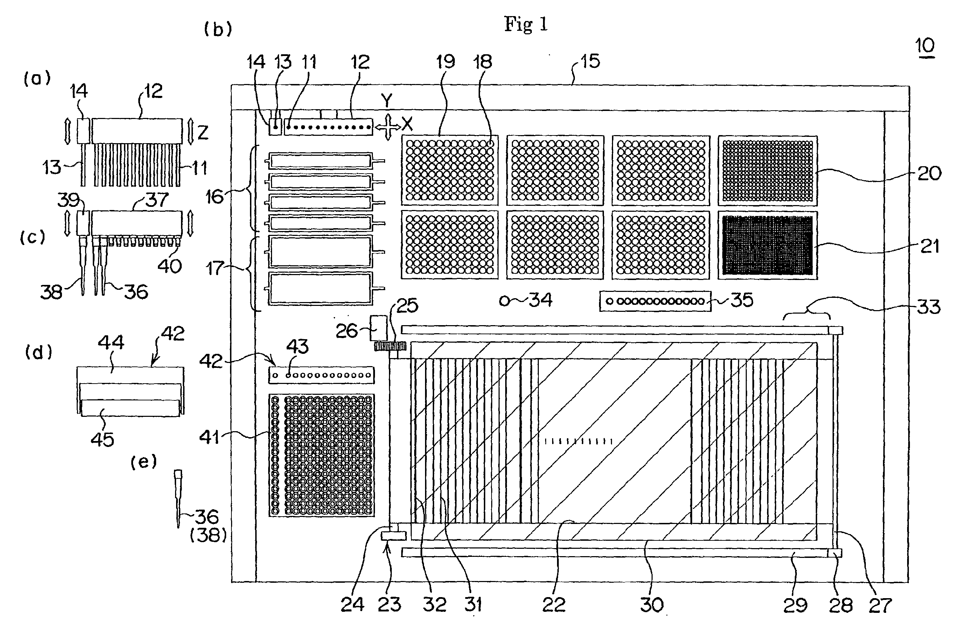

FIGS. 1 (a) and 1 (b) show an entire apparatus for positioning substances for detection 10 according to an embodiment of the present invention. The substances for detection to be positioned by the apparatus for positioning substances for detection 10 are, for example, the oligonucleotides with each of the base sequences that need to be detected in order to determine the base sequence of an unknown DNA.

As is shown in the two figures, the apparatus for positioning substances for detection 10 comprises a plurality (12 in this example) of nozzles 11 which function as conduits, and a cleanable dispenser 12 which suctions and discharges a plurality of suspensions. Furthermore, the apparatus for positioning substances for detection 10 also comprises a cleanable dispenser 14 with a suction and discharge nozzle 13 for the drawing up and discharge of a marking liquid such as a luminous liquid for use in marking. The dispensers 12 and 14 are equipped with a suction/discharge device (not shown in the figures) for adjusting the pressure inside the nozzles 11 and 13.

Furthermore, the apparatus for positioning substances for detection 10 is also equipped with a displacement device (not shown in the figures) which enables independent movement of the dispensers 12 and 14 along the XYZ axes to all regions of the table 15.

Reagent tanks 16 and 17 containing the various reagents are provided on the table 15 of the apparatus for positioning substances for detection 10. Examples of the reagents include adhesives which are required in the bonding and binding of the film described below, and ultraviolet curing resins, and such reagents are applied following positioning of the substances for detection and before rolling. Other reagents could include fixation materials necessary for fixing the substances for detection, such as solutions and adhesives which incorporate hydroxyl groups, amino groups, carboxyl groups, epoxy groups, biotin or avidin, and such reagents would be applied to the film prior to positioning of the substances for detection.

Furthermore, six microplates 19 with 96 wells, a microplate 20 with 384 wells, and a microplate 21 with 1536 wells are provided as vessels which each comprise a plurality of storage sections 18 into which the nozzles 11 are able to be inserted and which contain suspensions incorporating each of the various oligonucleotides.

A film 22 is mounted on a stage on the table 15, and dispensing, painting, or imprinting of the suspensions is carried out by the dispenser 12, while dispensing, painting, or imprinting of the marking liquid is carried out by the dispenser 14.

The film 22 is, for example, a rectangular film of a resin such as polypropylene, and is thin enough to be transparent or semitransparent. The effect of having the film transparent or semitransparent, is that when the film is used as a carrier for substances for detection, light emission from the marking substance can be captured with a good degree of reliability.

One end of the film 22 is formed so as to be attached to a substantially cylindrical core 24 which is rotated by a rolling apparatus 23 which functions as the integration device, or alternatively is formed as one with the core 24. The core 24 which is formed as one with the film 22 is formed of the same material as the film 22, such as a resin. The core 24 is rotated using a motor 26 via a gear 25. The core 24 can also be formed as one with the gear 25 which can then be later removed by cutting away.

Furthermore, the opposite end of the film 22 is attached to a mounting shaft 27, and a slider 28 is provided at either end of the mounting shaft 27. The sliders 28 are mounted onto slide channels 29 which guide the feeding of the film 22 in a constant direction during rotation of the core 24. In order to apply tension to the film 22, the mounting shaft 27 is urged by a resilient device such as a spring in the opposite direction to the roll direction.

Furthermore, a temperature control board 30 is provided underneath the film 22. The temperature control board 30 is formed using a Peltier element for example. Heating or cooling can be conducted by changing the direction of the current flowing through the Peltier element. Consequently, reactions and bonding between fixed materials and substances for detection can be promoted, enabling more rapid processing. The Peltier element can also be used for drying the suspensions.

Lines 31 drawn on to the film 22 are produced by dispensing, painting or imprinting of the suspensions by the dispenser 12, whereas lines 32 are produced by dispensing, painting or imprinting of the marking liquid by the dispenser 14. At the opposite end of the film 22 to the core 24, a blank region 33 is provided which can be used for bonding and bundling the surface of the rolled film 22.

Also provided on the table 15 is a regeneration section comprising a cleaning tank 35 containing a cleaning liquid into which the nozzles 11 and 13 are able to be inserted. The regeneration section is used to carry out cleaning of the nozzles 11 and 13 of the cleanable dispensers 12 and 14. The cleaning tank 35 is a series of vessels into which each of the nozzles 11 and 13 can be inserted, with the cleaning liquid contained in the vessels able to be changed regularly. Impurities are removed by passing ultrasonic waves through each of the vessels. Numeral 34 denotes a vessel containing the marking liquid for drawing up by the dispenser 14.

Next is a description of an apparatus for positioning substances for detection 10 which uses a disposable tip type dispenser in which the conduits are able to be detached from the main body.

As can be seen in FIG. 1 (c), a disposable tip type dispenser 37 is used in place of the dispenser 12, wherein a plurality (12 in the example shown) of disposable tips 36, which are freely detachable and which draw up and discharge the suspensions, are mounted on to the main body as conduits. Furthermore, a disposable tip type dispenser 39 with a disposable tip 38 is used in place of the dispenser 14 for drawing up and discharging the marking liquid used in the marking process. FIG. 1 (e) shows a detached tip 36 (38). Each tip 36 and 38 is mounted on a mounting nozzle 40 provided on the respective dispensers 37 and 39.

Furthermore for this example, instead of the cleaning tank 35, the aforementioned regeneration section is a tip rack 41, which is provided on the table 15 and contains replacement tips which are able to be mounted on the dispensers 37 and 39 in place of the tips 36 and 38.

FIG. 1 (d) is a roller tool 42 which is used in those cases where fixation materials for fixing the substances for detection, or reagents such as adhesives are applied to, or coated on to the entire surface of the film 22 in bulk.

The roller tool 42 comprises a mounting portion 44 which is equipped with a series of mating apertures 43 which mate with the mounting nozzles 40 of the dispensers 37 and 39, and a roller 45 which is able to rotate with respect to the mounting portion 44. By attaching the roller tool 42 to the dispensers 12 and 14 or the dispensers 37 and 39 and using the aforementioned displacement device, the reagents contained in the reagent tanks 16 and 17 can be applied to, or coated on to the surface of the film 22.

Moreover although not shown in the figures, the apparatus for positioning substances for detection 10 is also provided with a control section for controlling the suction/discharge device of the dispensers 12, 14, 37 and 39, the displacement device, and the rolling apparatus of the integration device. The control section incorporates an information processing apparatus which comprises: an input section constructed of devices such as a keyboard, a mouse, switches, buttons, a touch panel, and a floppy disk drive for carrying out the input of data or operational instructions from an operator; an output section which comprises a CRT, a liquid crystal display panel or a printer for displaying and outputting to the operator operational results, the content of instructions, or data; a data storage apparatus which comprises a device such as a memory device, a hard disk, a floppy disk, or a CD for storing various data; and a computational device such as a CPU for analyzing operational instructions and sending the appropriate instructions to each of the devices, displaying operational results, and carrying out a variety of calculations and analyses.

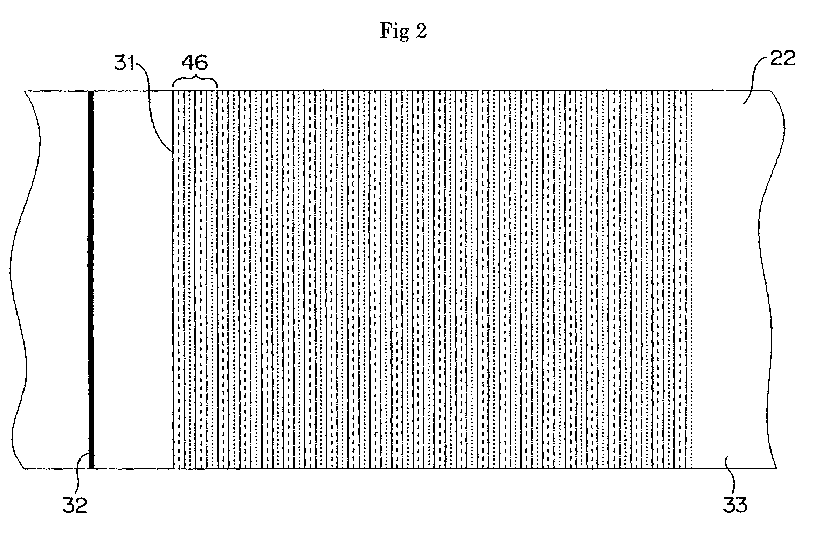

Next is a detailed description of the film 22, based on FIG. 2.

In FIG. 2, a plurality of parallel lines 31 of a variety of suspensions, which have been positioned on the film 22 by dispensing, are provided with a predetermined spacing between adjacent lines. In the figure numeral 46 denotes the spacing between adjacent nozzles 11 of the dispenser 12, or the spacing between adjacent tips 36 of the dispenser 37. Including the two outside edges, nine lines 31 corresponding to nine different suspensions are positioned within the spacing 46.

If it is assumed that the spacing between adjacent nozzles or adjacent tips is 9mm for example, then in FIG. 2 nine lines have been drawn within this 9mm spacing, meaning the spacing, or the pitch, between adjacent lines is 9 ÷8 = 1.125 (mm).

Consequently, in order to draw out 1000 lines, a film 22 of a length of 1.125 x 999 ≈ 1000mm = 1m is necessary. If the assumption is made that the film 22 is integrated by rolling with the aforementioned rolling apparatus, then if the thickness of the film 22 is assumed to be 0.03mm for example, and the diameter of the core 24 assumed to be 2mm, then the total surface area of the very narrow rectangle representing the side surface of the film (the length of the film representing the length and the thickness of the film the width) is 0.03 x 1000 = 30mm², and therefore if the diameter of the core 24 is 2mm, then the bottom surface of the cylinder formed by rolling the 1m film 22 into a cylinder will have a diameter of approximately 6mm. By slicing the cylinder in a direction perpendicular to the axis of the core, a plurality of carriers for substances for detection can be generated.

The carriers for substances for detection will support a high density of 1000 various substances for detection within a circular sheet of diameter 6mm. Despite the very high density, the spacing between adjacent lines on the film 22 is a length of approximately 1.125mm, so the positioning processing can be carried out simply, quickly and accurately.

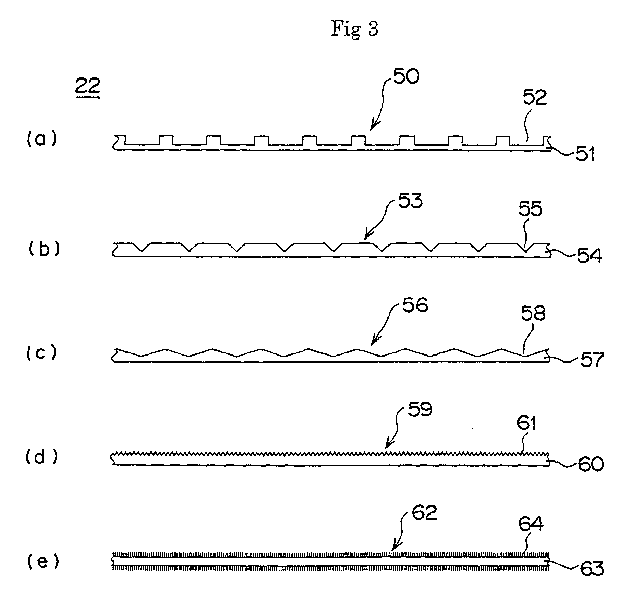

FIG. 3 shows a series of examples of a variety of films for use in positioning substances for detection.

The film for use in positioning substances for detection 50 of FIG. 3 (a) comprises a substrate 51 on which is provided a plurality of flat bottomed, line shaped concave sections 52 which run parallel to one another with a constant spacing between sections. The spacing between adjacent concave sections 52 is less than the actual spacing across a single concave section 52. The film for use in positioning substances for detection 53 of FIG. 3 (b) comprises a substrate 54 on which is provided a plurality of acute angled, line shaped concave sections 55 which run parallel to one another with a constant spacing between sections. The spacing between adjacent concave sections 55 is greater than the spacing across a single concave section 55.

The film for use in positioning substances for detection 56 of FIG. 3 (c) comprises a substrate 57 on which is provided a plurality of obtuse angled, line shaped concave sections 58 which run parallel to one another with a constant spacing between sections. Adjacent concave sections 58 contact one another. The film for use in positioning substances for detection 59 of FIG. 3 (d) comprises a substrate 60 on which is provided a plurality of minute, obtuse angled, line shaped concave sections 61 which run parallel to one another with a constant spacing between sections. Adjacent minute, concave sections 61 contact one another. The film for use in positioning substances for detection 62 of FIG. 3 (e) comprises a plurality of closely compacted cilia 64 which are provided on both the top and bottom surfaces of a substrate 63.

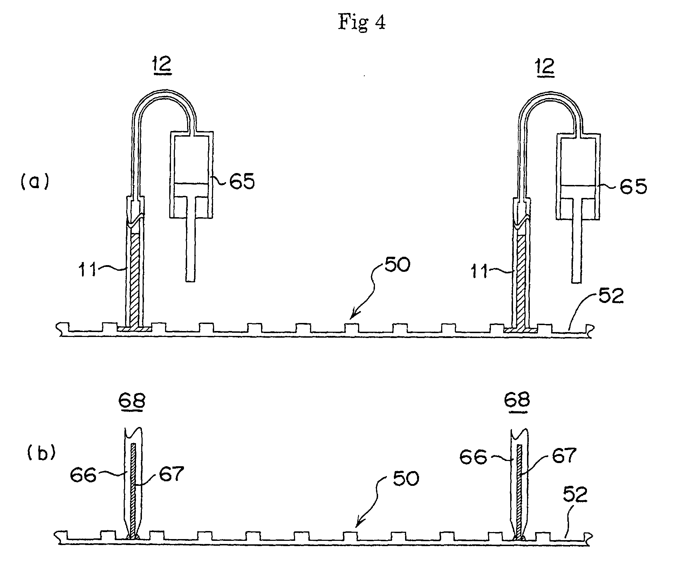

FIG. 4 (a) shows the dispensing, using the dispenser 12, of suspensions of substances for detection which have been drawn up from the storage vessels, on to the film for use in positioning substances for detection 50 shown in FIG. 3 (a). Each of the 12 (only two are shown in the figure) nozzles 11 of the dispenser 12 is inserted into a concave section 52 without touching the bottom of the section, and is then moved along in the direction of the concave section 52 while discharging the suspension. In the example shown, the spacing between adjacent nozzles 11 is nine concave sections 52 including the two outside edges. Numeral 65 denotes a suction/discharge device.

FIG. 4 (b) shows the use of a recording device 68 with a slotted needle 66 in place of the dispenser 12 of FIG. 4 (a), and the suspensions contained in the storage vessels are retained and then painted or written on to the film. Each of the 12 (only two are shown in the diagram) needles 66 of the recording device 68 is inserted into a concave section 52 without touching the bottom of the section, and is then moved along in the direction of the concave section 52 while discharging small quantities of the suspension. Numeral 67 denotes a slot for retaining the suspension.

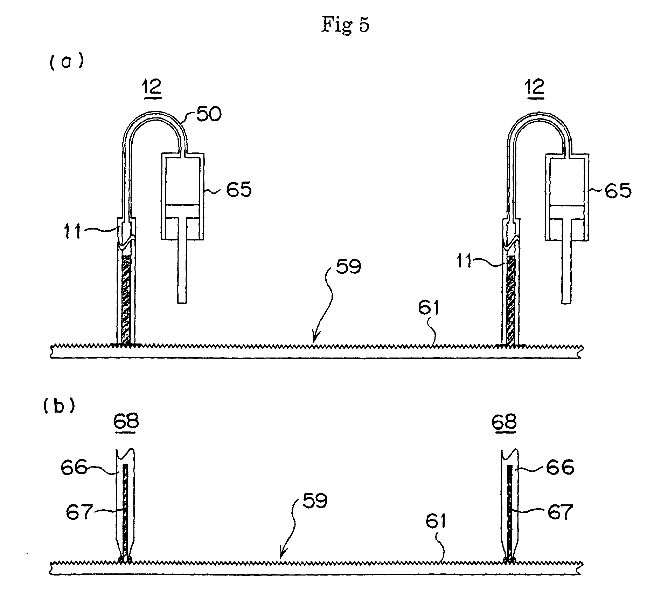

FIG. 5 (a) shows the dispensing, using the dispenser 12, of suspensions of substances for detection which have been drawn up from the storage vessels, on to the film for use in positioning substances for detection 59 shown in FIG. 3 (d). Each of the 12 (only two are shown in the figure) nozzles 11 of the dispenser 12 is not inserted inside the minute concave sections 61 but contacts the tips of the minute convex sections. Each nozzle 11 is then moved along in the direction of the concave sections 61 while discharging the suspension. In the case shown, the suspension is not necessarily applied to only one of the concave sections 61, but is rather applied so as to extend across a plurality of concave sections 61.

FIG. 5 (b) shows the use of the recording device 68 with a slotted needle 66 in place of the dispenser 12 of FIG. 5 (a), and the suspensions contained in the storage vessels are retained and then painted on to the film. Each of the 12 (only two are shown in the figure) needles 66 of the recording device 68 is inserted into a concave section 61 until contact is made with the bottom of the section, and is then moved along in the direction of the concave section 61 while discharging small quantities of the suspension. In the case shown, the suspension spreads out over a narrow region covering slightly more than a single concave section 61.

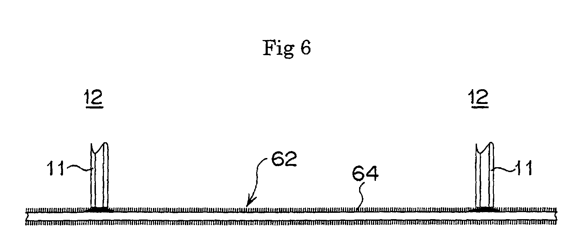

FIG. 6 shows the dispensing, using the dispenser 12, of suspensions of substances for detection which have been drawn up from the storage vessels, on to the film for use in positioning substances for detection 62 shown in FIG. 3 (e). Each of the 12 (only two are shown in the figure) nozzles 11 of the dispenser 12 contacts the minute cilia 64. Each nozzle 11 is then moved along in the direction of the lines while discharging the suspension.

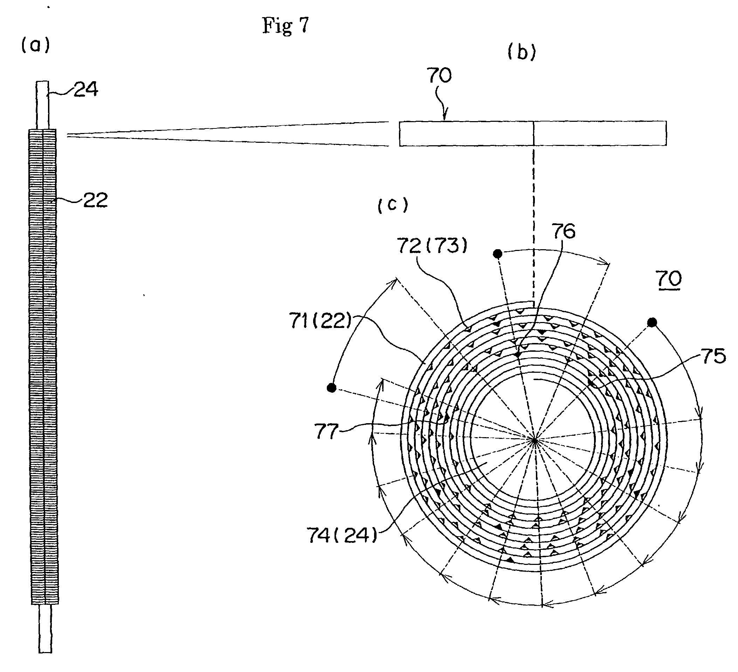

FIG. 7 (a) shows a film 53 which has been rolled about a core 24 using a rolling apparatus 23 as the aforementioned integration device, and then cut thinly (sliced) in a direction perpendicular to the axis of the core. The thickness of each slice is approximately 0.1mm for example.

FIG. 7 (b) shows a carrier for substances for detection 70, which is an enlargement of the side view of a single slice. FIG. 7 (c) shows an enlargement of the carrier for substances for detection 70 viewed from the layered surface (equivalent to a cross-section view of the cut).

The carrier for substances for detection 70 comprises a base member 71 formed in a single strip (a slice of the film 22), and various substances for detection 73 of predetermined chemical structure which are fixed at fixed locations 72 (shown as white triangular sections and not all of which are shown) along the length of the base member 71. The base member 71 is integrated by bringing the side portions thereof together while rolling the base member around a central core 74 (equivalent to the core 24, an auxiliary member), and the fixed location of each substance for detection on the layered surface is associated with the chemical structure of that particular substance for detection. Numerals 75, 76 and 77 (the black triangular sections) denote the marks formed of luminous material which are used for determining position on the layered surface.

In the example shown, the location of each substance for detection is expressed in terms of a distance measured along the base member and a central angle, with each of the marks 75, 76 and 77 as starting points, and this data is stored in the data storage apparatus of the aforementioned information processing apparatus. By so doing it is possible to improve the specific certainty of a detected substance for detection based on the location of the substance.

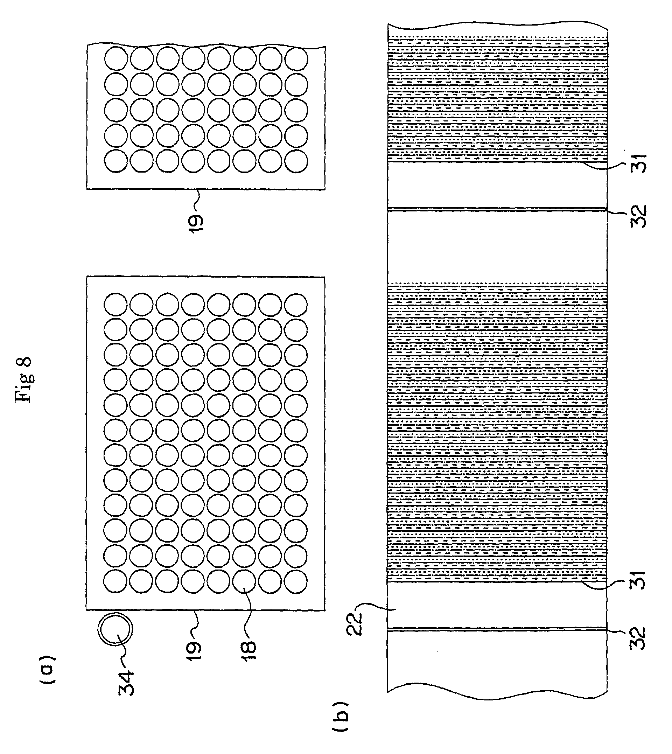

The fixed locations 72 (the white triangular sections) of substances for detection shown in FIG. 7 (c) are for the purposes of this description limited to only the substances for detection which correspond with the thick solid lines 31 of FIG. 8 (b). Hence, the fixed locations 72 shown in FIG. 7 (c) are shown at the spacing between adjacent nozzles, with those fixed locations which exist in the spacing between adjacent nozzles being omitted. Furthermore, a first mark 75 (a black triangular section) which is the closest mark in FIG. 7 (c) to the core 74 corresponds to the left hand line 32 in FIG. 8 (b). A second mark 76 in FIG. 7 (c) corresponds to the right hand line 32 in FIG. 8 (b).

Consequently, in the region between the first mark 75 and the second mark 76 only 12 fixed locations 72 of substances for detection are shown in FIG. 7 (c), whereas in actual fact fixed locations exist for the 96 lines labeled as numeral 31 in FIG. 8(b). The number of fixed locations will correspond with the number of liquid storage sections 18 of the microplate 19 shown in FIG. 8 (a). In the example shown in the figures, a mark is incorporated at a rate of one mark per 96 lines. By detecting the marks, identification of the locations of each of the corresponding substances for detection and the varieties thereof can be carried out relatively easily.

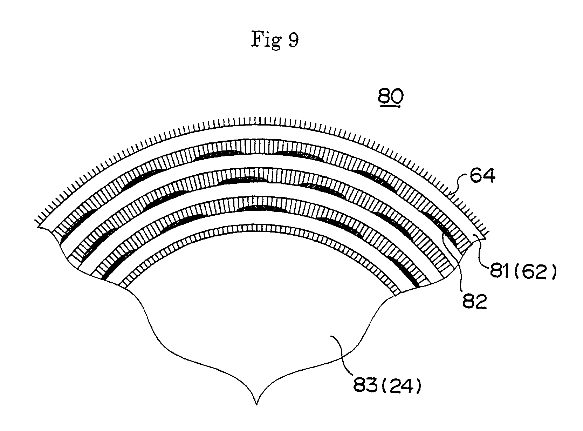

FIG. 9 shows one portion of a carrier for substances for detection 80 produced by using the rolling apparatus 23 to roll and slice the dispensed product shown in FIG. 6 which uses the film 62 shown in FIG. 3 (e). The carrier for substances for detection 80 comprises a base member 81 formed in a single strip (a slice of the film 62), and various substances for detection 82 of predetermined chemical structure which are fixed along the length of the base member 81, and the base member 81 is integrated by bringing the side portions thereof together while rolling the base member 81 around a central core 83 (equivalent to the core 24), and the fixed location of each substance for detection on the layered surface is associated with the chemical structure of that particular substance for detection.

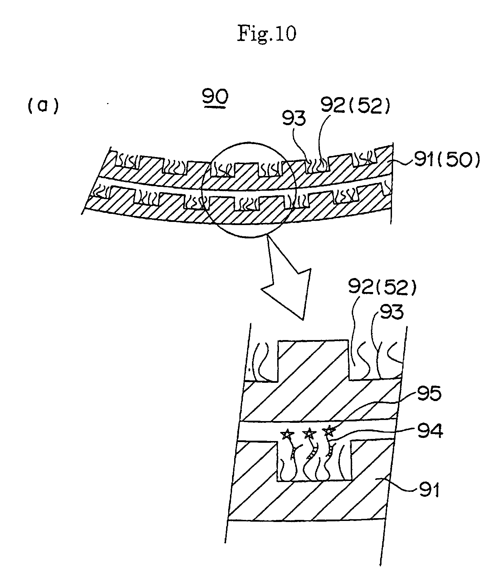

FIG. 10 shows one portion of another carrier for substances for detection 90. The carrier for substances for detection 90 comprises a base member 91 formed in a single strip (a slice of the film 50), and various oligonucleotides 93 as substances for detection of predetermined base sequence (equivalent to chemical structure) which are fixed in concave sections 92 (equivalent to the concave sections 52) formed along the length of the base member 91. The base member 91 is integrated by rolling with a spacing maintained between the side sections thereof, and the fixed location of each oligonucleotide on the layered surface is associated with the base sequence of that particular oligonucleotide.

Numeral 94 represents a target DNA which is to be examined or analyzed, and numeral 95 represents a fluorescent substance for labeling of the DNA. Based on the position on the layered surface where light emission from the fluorescent substance is detected, the target DNA is identified as a hybridized oligonucleotide base sequence, and by linking the base sequences the entire structure of the unidentified DNA can be specified.

Furthermore in the embodiment shown, the base member 91 has been rolled with a spacing maintained, and so by passing liquid through the cavity, the contact between a target substance and each substance for detection can be increased, thus effectively accelerating reaction rates.

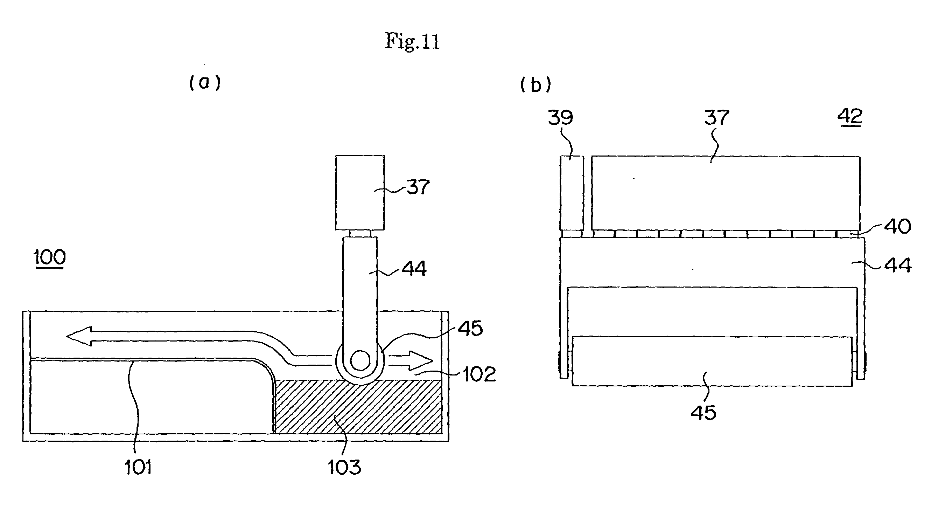

FIG. 11 (a) shows a reagent tank 100 for use with the roller tool 42 shown in FIG. 1, which ensures a uniform application of the reagent to the surface of the roller 45 during application of the reagent to the surface of the film 22. FIG. 11 (b) shows the roller tool 42 shown in FIG. 1 mounted on the dispensers 37 and 39. The mating apertures 43 of the mounting portion 44 mate with the mounting nozzles 40 of the dispensers 37 and 39 to mount the roller tool on to the dispensers 37 and 39.

In the reagent tank 100 of FIG. 11(a), numeral 101 denotes a planar section which ensures a uniform application of the reagent to the surface of the roller 45 of the roller tool 42. Numeral 102 denotes a deep tank section which contains the reagent. Numeral 103 denotes the reagent such as a liquid resin contained in the tank 102. The use of the reagent tank 100 involves using a spatula to take reagent 103 contained in the deep tank section 102 and form a layer of the reagent on the planar section 101, and then applying the reagent to the roller 45 by moving the roller across the surface of the planar section 101.

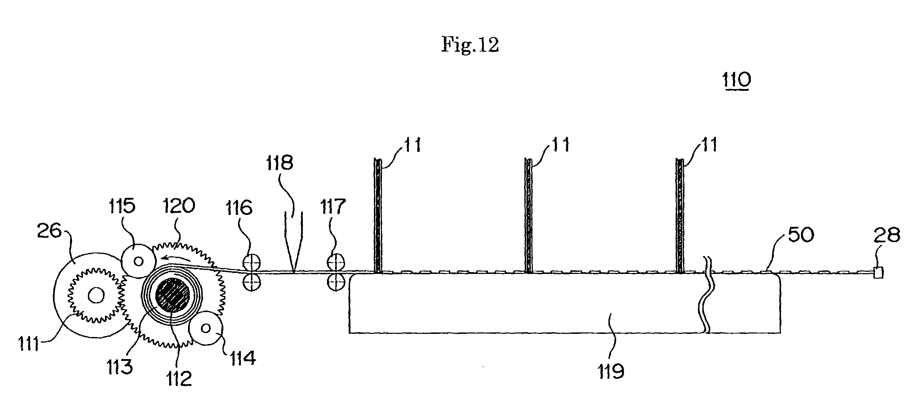

FIG. 12 shows a cutting and rolling apparatus 110 for cutting the aforementioned film to manufacture carriers for substances for detection. The apparatus 110 will, for example, cut the film 50 into narrow cords and then roll the cut film.

The apparatus 110 comprises a motor 26, a gear 111 which is mounted concentrically with the motor shaft of the motor 26, a gear 120 which meshes with the gear 111, and a rotational shaft 112, which is fixed to the gear 120 and is rotated by the motor 26, and on which is installed a core 113.

Furthermore the apparatus 110 is also provided with rotational auxiliary rollers 114, 115, 116 and 117 which hold the film 50 to prevent blurring and distortion during the rolling process, and moreover which ensure sufficient tension is applied to the film 50. The rotational auxiliary rollers 114 and 115 are principally for holding the rolled film 50, whereas the rotational auxiliary rollers 116 and 117 are principally for maintaining tension on the film. In the region enclosed between the rotational auxiliary rollers 116 and the rotational auxiliary rollers 117 there is also provided a cutting section 118 for thinly slicing the film 50, for which positioning of the substances for detection has already been completed, in the direction of the rolling. Numeral 119 denotes a stage on which the film 50 is mounted.

The cutting performed by the cutting section 118 can be carried out by the tip of a blade or by laser irradiation for example. In FIG. 12 the core 113 is provided around the outside perimeter of the rotational shaft 112, with the core 113 and the film 50 being formed as an integrated unit.

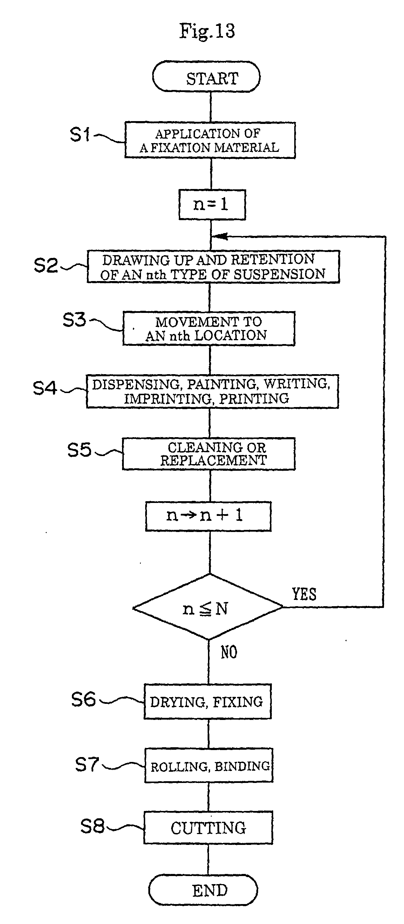

FIG. 13 shows a flow chart detailing the manufacture of a carrier for substances for detection.

The description below is for the case when 12x8 types (96 types) of substance for detection are positioned on a film 22 using the dispenser 12 shown in FIG. 1, with nine parallel lines positioned in the spacing 46 between adjacent nozzles including the two outside edges, as shown in FIG. 2. Each of the suspensions containing one of the 96 substances for detection is contained in one of the wells of the 96-well microplate 19 shown in FIG. 1.

At step S 1 the roller tool 42 is used to apply a fixation material required for fixing the substances for detection, to the entire surface of a film, for example the film 22. The mating apertures 43 of the mounting portion 44 of the roller tool 42 mate with the nozzles 11 of the dispensers 12 and 14, or with the mounting nozzles 40 of the dispensers 37 and 39, and the roller tool 42 is then moved across the surface of the film 22 using a displacement device (which is not shown in the figures) of the dispensers 37 and 39.

On the first count (n=1) at step S2, the 12 nozzles 11 of the dispenser 12 draw up from the liquid storage sections of the 96-well microplate 19, a first suspension of a substance for detection (through the first nozzle 11), a ninth suspension of a substance for detection (through the second nozzle), and similarly through to an 89th suspension of a substance for detection (through the 12th nozzle 11). In the case where the aforementioned recording device with liquid retention tips is used, each of the liquid retention tips are simply immersed in the appropriate liquid storage sections of the microplate 19, with no suction being necessary. Moreover, in the case of a printing apparatus, the step S2 is itself unnecessary.

At step S3, the left most nozzle 11 in the figures is moved to the first location at the top left hand edge of the film 22, with the other nozzles 11 being positioned at uniform spacings across the top of the film. The first location is the location which corresponds with the first type of substance for detection, and the locations of each of the other 11 nozzles which are automatically spaced at the aforementioned spacing correspond with the 9th type of substance for detection, through to the 89th substance for detection.

At step S4 the dispenser 12 is moved in a vertical direction (in the figure) down the film 22 while dispensing, painting, or imprinting lines of the various suspensions. In the case of the recording device the liquid retention tips are moved in a vertical direction (in the figure) while painting, imprinting, or writing the lines of the suspensions, whereas in the case of the printing apparatus the conduits are moved along the same lines in a vertical direction (in the figure) while printing.

At step S5 the 12 lines 31 have been drawn, and the nozzles 11 are moved to the cleaning tank 35 and cleaned. In the case where a disposable tip type dispenser 37 is used the tips 36 are exchanged at the tip rack 41. Furthermore in the case of the recording device the liquid retention tips are cleaned or replaced. In the case of the printing apparatus the conduits and storage sections are cleaned or replaced. Conducting cleaning or replacement in this manner enables the prevention of cross contamination with other substances for detection.

Next, at the second count (n=2) the procedure returns to step S2, and the processing of steps S2∼S5 is carried out on a second suspension of a substance for detection (through the first nozzle 11), a tenth suspension of a substance for detection (through the second nozzle), and similarly through to an 90th suspension of a substance for detection (through the 12th nozzle 11). The second location is a location between the already positioned lines 31 which is displaced from the first location by a spacing sufficient to prevent contact of the lines. In the example shown in the diagrams, the second location is displaced a distance of one eighth of the spacing 46 across from the first location. By repeating the processing of steps S2∼S5 until the eighth count (n=8), 96 types of substances for detection can be positioned in parallel lines on the film 22, as shown in FIG. 2.

This process completes the positioning of the suspensions from a single 96-well microplate 19.

In order to position 1000 suspensions, either approximately ten 96-well microplates 19 would be prepared, or if a dispenser with 24 conduits were to be used then approximately three 384-well microplates 20 would be prepared, with the above processing then repeated as necessary.

At step S6 the reaction, bonding, or adhesion between the substances for detection in the positioned suspensions and the fixation material is allowed to proceed, with the substances for detection either fixed to the film surface 22, or the suspensions dried.

At step S7 the fixed film 22 to which the substances for detection are fixed, is rolled and bound about the core 24 using the rolling apparatus 23 to produce an overall cylindrical shape.

At step S8 the rolled and bound film 22 is cut thinly in a direction perpendicular to the axial direction of the roll to manufacture a plurality of carriers for substances for detection.

In the processing described above, steps S1∼S6 correspond with a positioning step, step S7 is an integration step, and step S8 corresponds with a cutting step. In the above processing a pre-processing step can be included before step S where the film 22 can be coated with latex, foam resins or microbeads, or processed with channels. Furthermore step S1 is unnecessary in those cases where either the film 22 itself is made of a material which has the property of fixing the substances for detection, or the film has been processed to produce such a fixation property.

Furthermore, a post-processing step for the film 22, on which the substances for detection have been positioned, can be included between steps S5 and S6, or concurrently with step S6, or between steps S6 and S7. The post-processing step would include cases such as when an adhesive or an ultraviolet curing resin is applied to the film 22 with the aforementioned roller tool 42 for purposes of binding the rolled film 22.

Moreover, the cutting at step S8 can be carried out prior to rolling between steps S6 and S7 if the aforementioned cutting and rolling apparatus is used. Similarly, the cutting could also be carried out concurrently with step S7.

The embodiments above have been described in detail to further explain the present invention, and in no way preclude other embodiments. Consequently, the embodiments can be altered provided the gist of the invention is retained. For example, each of the structural elements, each of the films, and each of the devices described above can be combined in any manner and modified as necessary.

Furthermore, the above description focuses primarily on the positioning of substances for detection on a film using a dispenser, but of course positioning is also possible using a printing device or a recording device. Furthermore, the description refers to a circular type carrier for substances for detection, but a square carrier is also possible. Moreover, the above description refers to the use of oligonucleotides as the substances for detection, but the invention is not limited to the substances described, and can also be used with biopolymers such as other heredity substances, proteins, immune systems, and sugars, or with tissue.

### Description of the reference symbols

- 10: Apparatus for positioning substances for detection
- 11, 13: Nozzles (conduits)
- 12, 14: Dispenser (cleanable)
- 16, 17, 100: Reagent tanks
- 19, .....96: Well microplate (vessel)
- 22, 50, 53, 56, 59, 62: Film
- 23: Rolling apparatus (integration device)
- 31: Lines
- 35: Cleaning tank (regeneration device)
- 36, 38: Tips
- 37, 39: Dispenser (disposable tip type)
- 41: Tip rack (regeneration section)
- 42: Roller tool
- 52, 55, 58, 61: Concave sections
- 64: Cilia
- 70, 80, 90: Carriers for substances for detection
- 110: Cutting and rolling apparatus (integration device, cutting device)

## Claims

1. An apparatus for positioning substances for detection which comprises:
a dispenser having one or a plurality of conduits and a suction/discharge device for adjusting the pressure inside said conduits;
a regeneration section for cleaning or replacing said conduits;
a vessel having a plurality of liquid storage sections in which are contained suspensions incorporating each of the various substances for detection and into which said conduits are able to be inserted;
a stage on which is mounted a film whereon dispensing, painting or imprinting of the liquids by said dispenser, is carried out;
a displacement device which enables the movement of said conduits relative to said regeneration section, said vessel and said stage; and
a control section for controlling said displacement device and said suction/discharge device,
and said control section effects control to repeatedly carry out, suction, discharge and movement of the suspensions containing the substances for detection using said conduits, as well as the cleaning or replacement of said conduits, to thereby ensure that each of the suspensions will be positioned on the film mounted on said stage in narrow parallel lines and so as not to contact adjacent suspensions.

2. An apparatus for positioning substances for detection which comprises:
a printing device having one or a plurality of conduits, one or a plurality of storage sections which each contain a suspension incorporating one of the various substances for detection and which are communicated with said conduits, and a discharge device which adjusts the pressure inside said conduits and said storage sections and discharges the suspensions;
a regeneration section for cleaning or replacing said conduits and said storage sections;
a stage on which is mounted a film whereon printing is carried out by said printing device;
a displacement device which enables the movement of said conduits relative to said regeneration section and said stage;
and a control section for controlling said displacement device and said discharge device,
and said control device effects control to repeatedly carry out the discharge and movement of the suspensions incorporating the substances for detection using said conduits, as well as the cleaning or replacement of said conduits and said storage sections, to thereby ensure that each of said suspensions will be positioned on the film mounted on said stage in narrow parallel lines and so as not to contact adjacent suspensions.

3. An apparatus for positioning substances for detection which comprises:
one or a plurality of liquid retention tips made up of a slotted needle, a cylinder, a pen nib, or a linear imprint section;
a regeneration section for cleaning or replacing said liquid retention tips;
a vessel having a plurality of liquid storage sections in which are contained suspensions incorporating each of the various substances for detection and into which said liquid retention tips are able to be inserted;
a stage on which is mounted a film whereon painting, writing or imprinting is carried out by said liquid retention tips;
a displacement device which enables the movement of said liquid retention tips relative to said regeneration section, said vessel and said stage; and
a control section for controlling said displacement device,
and said control device effects control to repeatedly carry out retention and displacement of the suspensions incorporating the substances for detection using said liquid retention tips, as well as cleaning or replacement of said tips, to thereby ensure that each of the suspensions will be positioned on the film mounted on said stage in narrow parallel lines and so as not to contact adjacent suspensions.

4. An apparatus for positioning substances for detection according to any one of claim 1 through 3, wherein said control section, with the conduits or liquid retention tips in which a particular type of suspension has been drawn up, retained or stored, sequentially repeats control so that said suspension is dispensed, painted, imprinted, written or printed on said film in a line from a predetermined position, and then so that said conduits or liquid retention tips are replaced or cleaned by said regeneration section, for positions successively displaced a minute distance from said predetermined position until all the different types of suspension have been completed, to thereby ensure that each of the suspensions incorporating a substance for detection will be positioned on the film mounted on said stage in narrow parallel lines and so as not to contact adjacent suspensions.

5. An apparatus for positioning substances for detection according to any one of claim 1 through claim 4, which further comprises integration means which rolls said film on which said substances for detection have been positioned and fixed in a series of parallel lines by dispersion, painting, impression, writing or printing, in a direction at right angles to said lines or alternatively laminates said film, and cutting means for thinly slicing said film either after integration or prior to integration.

6. A film for use in positioning substances for detection, wherein with a film with suspensions incorporating substances for detection positioned or fixed on the surface in parallel lines at a predetermined spacing, for integration by either rolling up, or alternatively laminating the film to form a layered structure, a series of concave portions which are capable of holding said suspensions are formed in parallel lines on the surface of said film, and an adhesion portion which will bond the film surface is provided at portions of said film which come in contact upon integration.

7. A film for use in positioning substances for detection according to claim 6, wherein said adhesive portion is either an adhesive which is painted, or coated on said film surface, or is minute irregularities or cilia which are provided on the film surface and which have the property of attaching like surface pairs to each other.

8. A film for use in positioning substances for detection according to either one of claim 6 and claim 7, wherein said film is provided with either a linear type, particulate type, or sheet type homoiothermic material which is used for heating or cooling.

9. A film for use in positioning substances for detection according to any one of claim 6, through claim 8, wherein all or a portion of said film is either formed of, or coated with, a fixation material which will react with, bond with, impregnate, or adhere to the positioned substance for detection to thereby fix the substance for detection in place.

10. A film for use in positioning substances for detection according to any one of claim 6 through claim 9, wherein said film is provided with a line shaped mark for identifying a location on said film.

11. A material for substances for detection in which substances for detection of predetermined chemical structures are positioned on a film surface in parallel lines with a minute spacing therebetween, with the chemical structure of each substance for detection and the location thereof associated.

12. A material for substances for detection according to claim 11, wherein said film is the film for use in positioning substances for detection according to any one of claim 6 through claim 10.

13. A method for manufacturing a carrier for substances for detection, comprising:
a positioning step which uses an apparatus for positioning substances for detection according to any one of claim 1 through claim 5, whereby suspensions which each incorporate one of a variety of substances for detection are positioned on to either one, or two or more films in a plurality of narrow, parallel lines which do not come in contact with one another, by dispensing, painting, imprinting, writing, or printing;
an integration step wherein surfaces of said films on which is fixed each of the substances for detection are brought together in a direction at right angles to said lines, and then integration is carried out by either rolling or laminating the film either with a spacing between the surfaces or with the surfaces sandwiching an auxiliary member; and
a cutting step in which the film on which is fixed each of the substances for detection is thinly sliced to produce a plurality of carriers;
and the fixed locations of each substance for detection on the layer formation surface, which is a cross section through the cut, and the chemical structure thereof are associated.

14. A method for manufacturing a carrier for substances for detection according to claim 13, wherein said positioning step sequentially repeats: a step in which each of said conduits or liquid retention tips are moved to, and inserted into a vessel containing a suspension which incorporates a substance for detection of a predetermined type with the suspension then being drawn up and retained; a step in which each of said conduits or liquid retention tips disperses, paints, imprints or writes said suspension in a line from a predetermined location on said film; and a regeneration step in which said conduits or liquid retention tips are cleaned or replaced, to thereby position the various suspensions which incorporate said substances for detection in parallel non-touching lines.

15. A method for manufacturing a carrier for substances for detection according to claim 13, wherein said positioning step sequentially repeats: a step in which a conduit communicated with a storage section containing a suspension which incorporates a substance for detection of a predetermined type prints said suspension in a line from a predetermined location on said film; and a regeneration step in which said conduit and storage section are cleaned or replaced, to thereby position the suspension which incorporates said substance for detection in parallel non-touching lines.

16. A method of identifying the location of a substance for detection wherein at the time of identifying the location of a substance for detection on a carrier for substances for detection which has;
either one, or two or more long and slender base members, a variety of substances for detection of predetermined chemical structure which are lined up and fixed along the length of the base members, and a mark which is provided at either one, or two or more specified positions on the base members,
and said base members are rolled while bringing side portions thereby into contact with each other, while maintaining spacing, or while sandwiching an auxiliary member to achieve a layered integration, and said substances for detection are fixed and retained on said base member,
and the fixed location of each substance for detection on the disk shaped layered surface is associated with the chemical structure of that substance for detection,
said mark is taken as a starting point, and then depending on the distance lengthwise along the base member or the central angle, the location of the substance for detection is identified based on a correspondence table which associates the fixed location of each substance for detection with the type of substance for detection and the chemical structure thereof.
